# EUROPÄISCHE PATENTSCHRIFT

(11) **EP 0 486 608 B1**
(45) Veröffentlichungstag und Bekanntmachung des Hinweises auf die Patenterteilung: **23.02.1994**
(21) Anmeldenummer: 90913137.7
(22) Anmeldetag: 06.08.1990
(51) Int. Cl.: C14C 9/00, C08F 8/44

(54) **VERWENDUNG VON COPOLYMERISATEN AUF BASIS VON LANGKETTIGEN ALKYLVINYLETHERN UND ETHYLENISCH UNGESÄTTIGTEN DICARBONSÄUREANHYDRIDEN ZUM HYDROPHOBIEREN VON LEDER UND PELZFELLEN**
USE OF COPOLYMERIZATES BASED ON LONG-CHAIN ALKYL VINYL ETHERS AND ETHYLENICALLY UNSATURATED DICARBOXYLIC ACID ANHYDRIDES FOR WATERPROOFING LEATHER AND FURS
UTILISATION DE COPOLYMERISATS A BASE D'ETHERS VINYLIQUES D'ALKYLE A CHAINES LONGUES ET D'ANHYDRIDES D'ACIDE DICARBOXYLIQUE ETHYLENIQUEMENT INSATURES POUR IMPERMEABILISER DES CUIRS ET DES PEAUX

(30) Priorität: 08.08.1989 DE 3926168
(43) Veröffentlichungstag der Anmeldung: 27.05.1992
(73) Patentinhaber: BASF Aktiengesellschaft, 67063 Ludwigshafen (DE)
(72) Erfinder: SCHAFFER, Ortwin, D-6700 Ludwigshafen (DE); BAY, Herbert, D-7410 Reutlingen (DE); STORK, Karl, D-6719 Carlsberg (DE); GREIF, Norbert, D-6719 Bobenheim (DE); OPPENLÄNDER, Knut, D-6700 Ludwigshafen (DE); DENZINGER, Walter, D-6720 Speyer (DE); HARTMANN, Heinrich, D-6703 Limburgerhof (DE)
(86) Internationale Anmeldenummer: EP9001283
(87) Internationale Veröffentlichungsnummer: WO9102094

(56) Entgegenhaltungen:
- EP-A- 0 307 815
- DE-B- 2 629 748
- FR-A- 1 080 447
- GB-A- 725 671
- US-A- 2 746 837

## Beschreibung

Aus der DE-OS 3 733 172 sind Kraftstoffe für Ottomotoren bekannt, die u.a. geringe Mengen an Copolymerisaten aus (a) C₁- bis C₃₀-Alkylvinylethern oder Mischungen aus C₁- bis C₃₀-Alkylvinylethern und Olefinen mit 2 bis 40 C-Atomen und (b) Maleinsäureanhydrid enthalten, eine Molmasse von 500 bis 20 000 g/Mol aufweisen und bei denen die Anhydridgruppen der Copolymerisate ganz oder teilweise mit wäßrigen Alkalimetall- oder Erdalkalimetallbasen umgesetzt sind und der Rest der Carboxylgruppen mit Alkoholen und/oder Aminen in die entsprechenden Ester- und/oder Amidgruppen und/oder Ammoniumsalze umgesetzt ist.

Aus der DE-PS 2 629 748 ist die Verwendung von mit Alkalimetallbasen oder Aminen verseiften Copolymerisaten aus C₁₀- bis C₃₀-Olefinen und Maleinsäureanhydrid zum Füllen und Fetten von Leder und Pelzfellen bekannt. Die hydrolysierten Copolymerisate können noch mit Alkalibisulfit umgesetzt werden. Da die Copolymerisate in organischen Lösemitteln hergestellt und die Lösemittel nicht entfernt werden, enthalten die daraus hergestellten wäßrigen Copolymerisatdispersionen beträchtliche Mengen organischer Lösemittel, beispielsweise Xylol oder Dodecylbenzol. Solche Dispersionen eignen sich zwar zum Fetten von Leder und Pelzfellen, sie sind jedoch aufgrund ihres Gehalts an organischen Lösemitteln für eine Hydrophobierung von Leder und Pelzfellen praktisch nicht brauchbar.

Aus der US-PS 2 746 837 ist die Behandlung von Häuten, Pelzfellen und Leder mit niedrigen Alkylvinylether-Maleinsäureanhydrid-Copolymerisaten bekannt, bei denen mindestens 5 und nicht mehr als 15 % der Anhydridgruppen in Form der Halbamidsalze von Ammoniak, niedrigen aliphatischen primären und sekundären Aminen vorliegen. Die Behandlung erfolgt mit Hilfe von wäßrigen Lösungen der Halbamidsalze der genannten Copolymerisate.

Aus der US-PS 2 768 056 ist ein Verfahren zum Imprägnieren von Häuten und Pelzfellen bei pH-Werten von 2,5 bis 4,0 mit wäßrigen Lösungen von hydrolysierten und partiell neutralisierten Copolymerisaten aus Methylvinylether-Maleinsäureanhydrid-Copolymerisaten bekannt.

Der Erfindung liegt die Aufgabe zugrunde, ein verbessertes Mittel für die Hydrophobierung von Leder und Pelzfellen zur Verfügung zu stellen.

Die Aufgabe wird erfindungsgemäß gelöst durch die Verwendung von Copolymerisaten, die durch radikalische Copolymerisation von
(a) C₈- bis C₄₀-Alkylvinylethern oder Mischungen aus C₈- bis C₄₀-Alkylvinylethern und bis zu 50 mol-% C₈- bis C₄₀-Monoolefinen mit
(b) ethylenisch ungesättigten C₄- bis C₈-Dicarbonsäureanhydriden

zu Copolymerisaten mit Molmassen von 500 bis 20 000 g/Mol, anschließende Solvolyse der Anhydridgruppen der Copolymerisate und zumindest partielle Neutralisation der bei der Solvolyse entstehenden Carboxylgruppen in wäßrigem Medium mit Basen erhältlich sind und die in Form von 0,5 bis 50 gew.-%igen wäßrigen Lösungen oder Dispersionen vorliegen, als Mittel zum Hydrophobieren von Leder und Pelzfellen.

Die Copolymerisate sind beispielsweise aus der DE-OS 3 733 172 bekannt. Sie werden durch Copolymerisieren der Monomeren der Gruppe (a) mit den Monomeren der Gruppe (b), Solvolysieren der Anhydridgruppen der Copolymerisate und partielle Neutralisation der bei der Solvolyse entstehenden Carboxylgruppen hergestellt. Als Monomere der Gruppe (a) kommen C₈- bis C₄₀-Alkylvinylether oder Mischungen dieser Alkylvinylether mit C₈- bis C₄₀-Monoolefinen in Betracht. Zu den Alkylvinylethern gehören beispielsweise n-Octylvinylether, 2-Ethylhexylvinylether, 2,2,4-Trimethylpentylvinylether, n-Decylvinylether, Dodecylvinylether, Isododecylvinylether, n-Tridecylvinylether, Isotridecylvinylether, n-Tetradecylvinylether, n-Hexadecylvinylether, n-Octadecylvinylether, n-Eicosylvinylether, n-Docosylvinylether, n-Tetracosylvinylether, n-Hexacosylvinylether, n-Octacosylvinylether, Cyclooctylvinylether und Mischungen der genannten Alkylvinylether.

Geeignete Monoolefine mit 8 bis 40 Kohlenstoffatomen sind beispielsweise n-Octen-1, 2,4,4-Trimethylpenten-1, 2,4,4-Trimethylpenten-2, Diisobuten, das technisch als Isomerengemisch aus ca. 80 Gew.-% 2,4,4-Trimethylpenten-1 und ca. 20 Gew.-% 2,4,4-Trimethylpenten-2 vorliegt, 4,4-Dimethylhexen-1, Decen-1, Dodecen-1, Tetradecen-1, Hexadecen-1, Octadecen-1, C₂₀-Olefin-1, C₂₂-Olefin-1, C₂₄-Olefin-1, C₂₀- bis C₂₄-Olefin-1, C₂₄- bis C₂₈-Olefin-1, C₃₀-Olefin-1, C₃₅-Olefin-1 und C₄₀-Olefin-1. Die Olefine bzw. Mischungen von Olefinen sind Handelsprodukte. Außer den geradkettigen Olefinen kommen auch cyclische Olefine in Betracht wie Cycloocten. Die Olefine können von der Herstellung her geringe Mengen an inerten Kohlenwasserstoffen enthalten, z.B. bis zu etwa 5 Gew.-%. Die Olefine werden üblicherweise in der im Handel erhältlichen Qualität eingesetzt. Sie brauchen keiner besonderen Reinigung unterworfen zu werden. Die bevorzugten Olefine sind C₁₆- bis C₃₀-Olefine. Die genannten Olefine werden in Mischung mit den Alkylvinylether bei der Copolymerisation als Monomer der Gruppe (a) eingesetzt. Der Anteil der Olefine in den Mischungen beträgt bis zu 50 mol-%.

Als Komponente (b) der Copolymerisate kommen monoethylenisch ungesättigte C₄- bis C₈-Dicarbonsäureanhydride in Betracht, z.B. Maleinsäureanhydrid, Itaconsäureanhydrid, Mesaconsäureanhydrid, Citraconsäureanhydrid und Methylenmalonsäureanhydrid und Mischungen untereinander. Von den genannten Anhydriden wird vorzugsweise Maleinsäureanhydrid verwendet. Die Copolymerisate enthalten 40 bis 60 mol-% Alkylvinylether und gegebenenfalls Monoolefine und 60 bis 40 mol-% der genannten Dicarbonsäureanhydride einpolymerisiert und haben eine Molmasse von 500 bis 20 000, vorzugsweise 800 bis 10 000 g/Mol. Sie sind dadurch erhältlich, daß man die Monomeren (a) und (b) im Molverhältnis 1,1:1 bis 1:1 polymerisiert. Vorzugsweise polymerisiert man die Monomeren (a) und (b) im Molverhältnis 1:1 oder verwendet lediglich einen 1 gew.-%igen Überschuß an Monomeren der Komponente (a). Die Monomeren der Gruppen (a) und (b) bilden bekanntlich alternierende Copolymerisate, die bei hohen Molekulargewichten die Monomeren (a) und (b) zu jeweils 50 mol-% einpolymerisiert enthalten. Bei sehr niedrigen Molekulargewichten der Copolymerisate kann je nach Art der Endgruppen eine Abweichung vom molaren Verhältnis in dem oben angegebenen Rahmen vorliegen, wenn beispielsweise die Copolymerisatkette mit dem Monomeren (a) startet und auch mit dem Monomeren (a) abbricht.

Die Copolymerisate können nach allen bekannten üblichen Polymerisationsverfahren hergestellt werden, z.B. Substanz-, Suspensions-, Fällungs- und Lösungspolymerisation. Die Copolymerisation wird vorzugsweise in Gegenwart von Radikale bildenden Verbindungen durchgeführt. Man benötigt davon bis zu 10, vorzugsweise 0,2 bis 5 Gew.-%, bezogen auf die bei der Copolymerisation eingesetzten Monomeren. Bei allen genannten Polymerisationsverfahren wird unter Ausschluß von Sauerstoff gearbeitet, vorzugsweise in einem Stickstoffstrom. Für alle Polymerisationsmethoden werden die üblichen Apparaturen verwendet, z.B. Autoklaven und Kessel, die beispielsweise mit Anker-, Blatt-, Impeller- oder Mehrstufenimpuls-Gegenstrom-Rührern ausgestattet sind. Besonders bevorzugt ist die Substanzpolymerisation der Monomeren der Gruppen (a) und (b). Sie wird bei Temperaturen von 80 bis 300, vorzugsweise von 120 bis 200°C durchgeführt, wobei die niedrigste zu wählende Polymerisationstemperatur vorzugsweise etwa mindestens 20°C über der Glastemperatur des gebildeten Polymeren liegt. Je nach Molekulargewicht, das die Copolymerisate haben sollen, werden die Polymerisationsbedingungen gewählt. Polymerisation bei hohen Temperaturen ergibt Copolymerisate mit niedrigen Molekulargewichten, während bei niedrigeren Polymerisationstemperaturen Polymerisate mit höheren Molekulargewichten entstehen. Auch die Menge des Polymerisationsinitiators hat einen Einfluß auf das Molekulargewicht. Man benötigt im allgemeinen 0,01 bis 5 Gew.-%, bezogen auf die bei der Polymerisation eingesetzten Monomeren, an Radikale bildenden Polymerisationsinitiatoren. Höhere Initiatormengen führen hierbei zu Copolymerisaten mit niedrigeren Molekulargewichten. Die Monomeren (a) und (b) können bei Temperaturen von oberhalb 200°C auch in Abwesenheit von Polymerisationsinitiatoren copolymerisiert werden. D.h. ein Einsatz von Initiatoren ist nicht unbedingt erforderlich, weil die Monomeren (a) und (b) bei Temperaturen von oberhalb 200°C auch in Abwesenheit von Initiatoren bereits radikalisch polymerisieren.

Geeignete Polymerisationsinitiatoren sind beispielsweise Acetylcyclohexansulfonylperoxid, Diacetylperoxidicarbonat, Dicyclohexylperoxidicarbonat, Di-2-ethylhexylperoxidicarbonat, Tertiär-butylperneodecanoat, 2,2'-Azobis(4-methoxy-2,4-dimethylvaleronitril), Tertiär-butylperpivalat, Tertiär-butylper-2-ethyl-hexanoat, Tertiär-butylpermaleinat, 2,2'-Azobis(isobutyronitril), Bis-(tertiär-butylperoxi)cyclohexan, Tertiär-butylperoxiisopropylcarbonat, Tertiär-butylperacetat, Di-tertiär-butylperoxid, Ditertiäramylperoxid, Cumolhydroperoxid und Tertiär-butylhydroperoxid. Die Initiatoren können allein oder in Mischung untereinander angewendet werden. Sie werden bei der Substanzpolymerisation vorzugsweise separat oder in Form einer Lösung oder Dispersion in dem Monomer der Komponente (a) in den Polymerisationsreaktor eingebracht. Bei der Copolymerisation können selbstverständlich auch Redox-Coinitiatoren mitverwendet werden, z.B. Benzoin, Dimethylanilin, Ascorbinsäure sowie organisch lösliche Komplexe von Schwermetallen, wie Kupfer, Cobalt, Eisen, Mangan, Nickel und Chrom. Die Mitverwendung von Redox-Coinitiatoren gestattet es, die Polymerisation bei tieferer Temperatur durchzuführen. Die üblicherweise verwendeten Mengen an Redox-Coinitiatoren betragen etwa 0,1 bis 2000, vorzugsweise 0,1 bis 1000 ppm, bezogen auf die eingesetzten Mengen an Monomeren. Falls das Monomergemisch an der unteren Grenze des für die Polymerisation in Betracht kommmenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so daß in jedem Temperaturintervall eine ausreichende Konzentration an Radikalen zur Verfügung steht.

Um niedrigmolekulare Polymerisate herzustellen, ist es oft zweckmäßig, die Copolymerisation in Gegenwart von Reglern durchzuführen. Hierfür können übliche Regler verwendet werden, wie z.B. C₁- bis C₄-Aldehyde, Ameisensäure und organische SH-Gruppen enthaltende Verbindungen, wie 2-Mercaptoethanol, 2-Mercaptopropanol, Mercaptoessigsäure, Mercaptopropionsäure, tertiär-Butylmercaptan, n-Dodecylmercaptan und tertiär-Dodecylmercaptan.

Die Polymerisationregler werden im allgemeinen in Mengen von 0,1 bis 10 Gew.-%, bezogen auf die Monomeren, eingesetzt.

Die Copolymerisation wird in üblichen Polymerisationsapparaturen, beispielsweise einem druckdichten Kessel, der mit einem Rührer versehen ist, in druckdichten Rührkesselkaskaden oder in einem Rohrreaktor durchgeführt. Die Copolymerisation der (a) Alkylvinylether und gegebenenfalls der Mischungen aus Alkylvinylethern und Olefinen und der (b) Anhydride erfolgt im molaren Verhältnis von (a):(b). Die Copolymerisation kann kontinuierlich oder diskontinuierlich durchgeführt werden.

Beispielsweise kann man einen oder mehrere Alkylvinylether oder Mischungen aus Alkylvinylethern und mindestens einem Olefin im Reaktor vorlegen und unter Rühren auf die gewünschte Polymerisationstemperatur erhitzen. Sobald die im Reaktor vorgelegten Monomeren die gewünschte Polymerisationstemperatur erreicht haben, dosiert man das ethylenisch ungesättigte Dicarbonsäureanhydrid zu. Falls ein Initiator eingesetzt wird, wird er dem Reaktionsgemisch, vorzugsweise separat oder gelöst in einem zur Polymerisation gelangenden Alkylvinylether oder einer Mischung aus Alkylvinylether und Olefin zudosiert. Der Polymerisationsregler wird, sofern er eingesetzt wird, entweder separat oder ebenfalls in einem Monomer der Komponente (a) gelöst der polymerisierenden Mischung zugefügt. Die ethylenisch ungesättigten Carbonsäureanhydride, insbesondere Maleinsäureanhydrid, werden vorzugsweise in Form einer Schmelze dem Reaktionsgemisch zugegeben. Die Temperatur der Schmelze des Maleinsäureanhydrids beträgt etwa 70 bis 90°C. Falls man bei der Copolymerisation die Monomeren der Komponente (a) im überschuß anwendet, z.B. in einem 10 %igen überschuß, so können sie nach Abschluß der Copolymerisation ohne Schwierigkeiten vom Reaktionsgemisch mit Hilfe einer Destillation, vorzugsweise unter vermindertem Druck, aus der Copolymerisatschmelze entfernt werden. Die Copolymerisatschmelze wird anschließend zweckmäßigerweise direkt weiterverarbeitet.

Die Monomeren der Gruppen (a) und (b) können selbstverständlich auch nach Art einer Fällungs- und Suspensionspolymerisation hergestellt werden.

Bei der Fällungspolymerisation werden solche Lösemittel eingesetzt, in denen die Monomeren, d.h. Vinylether und gegebenenfalls Olefin und Maleinsäureanhydrid, löslich und das gebildete Copolymere unlöslich ist und ausfällt. Solche Lösemittel sind beispielsweise aromatische Kohlenwasserstoffe wie Benzol, Toluol, o-Xylol, m-Xylol, p-Xylol sowie die technischen Xylolgemische, Ethylbenzol, Cumol sowie Halogenwasserstoffe wie Methylenchlorid, 1,1- und 1,2-Dichlorethan, 1,1,1-Trichlorethan, 1,1,2-Trichlorethylen, 1,1,2-Trichlorethan, Perchlorethylen, 1,2-Dichlorpropan, Butylchlorid, 1,1,2-Trichlor-1,2,2-trifluorethan, 1,1,1,2-Tetrachlor-2,2-difluorethan, 1,1,2,2-Tetrachlor-1,2-difluorethan und Ether wie Diethylether, Dipropylether, Dibutylether, Methyl-tert.-butylether, Diethylenglykoldimethylether und Mischungen untereinander.

Bei der Suspensionspolymerisation werden solche Lösemittel eingesetzt, in denen alle oder mindestens eines der Monomeren und die gebildeten Polymeren unlöslich sind. Hierfür geeignet sind geradkettige und verzweigte aliphatische und cycloaliphatische Kohlenwasserstoffe. Vorzugsweise seien beispielsweise genannt Pentan, Hexan, Heptan, Octan, Isooctan, Cyclohexan, Methylcyclohexan, Ethylcyclohexan, Dimethylcyclohexan, Diethylcyclohexan und Mischungen untereinander. Bei der Durchführung der Fällungspolymerisation ist es zweckmäßig, besonders, wenn die Konzentrationen an Monomer bzw. Copolymer mehr als 40 Gew.-% betragen, zur Verhinderung der Aggregatbildung in Gegenwart eines Schutzkolloids zu arbeiten. Bei der Suspensionspolymerisation ist es zwingend notwendig, in Gegenwart von Schutzkolloiden zu arbeiten, um unerwünschte Agglomerationen der entstehenden Polymerisate zu verhindern.

Als Schutzkolloide sind polymere Stoffe geeignet, die in Lösungsmitteln gut löslich sind und keine Reaktion mit den Monomeren eingehen. Geeignet sind beispielsweise Copolymere des Maleinsäureanhydrids mit C₁₂- bis C₃₀-Vinylalkylethern und/oder Olefinen mit 8 bis 20 C-Atomen sowie bevorzugt deren Monoester mit C₁₀- bis C₂₀-Alkoholen oder Mono- oder Diamide mit C₁₀- bis C₂₀-Alkylaminen sowie Polyalkylvinylether, deren Alkylgruppe 1 bis 20 C-Atome enthält, wie beispielsweise Polymethyl-, Polyethyl-, Polyisobutyl- sowie Polyoctadecylvinylether. Die zugesetzten Mengen an Schutzkolloid liegen üblicherweise bei 0,05 bis 4 Gew.-% (berechnet als eingesetzte Monomere), vorzugsweise 0,1 bis 2 Gew.-%, wobei es oftmals von Vorteil ist, mehrere Schutzkolloide zu kombinieren.

Bei der Polymerisation ist es zweckmäßig, das Lösemittel, das Schutzkolloid und ein Monomer im Reaktor vorzulegen und bei gewählter Polymerisationstemperatur unter intensivem Rühren das Comonomer und den Initiator sowie gegebenenfalls den Coinitiator und Regler zuzudosieren. Dabei ist es im allgemeinen unwesentlich, ob das Maleinsäureanhydrid vorgelegt wird und die Alkylvinylether und gegebenenfalls Olefine zudosiert werden, oder ob die Alkylvinylether und gegebenenfalls Olefine vorgelegt werden und das Maleinsäureanhydrid zudosiert wird. Natürlich ist es auch möglich, nur das Lösungsmittel und das Schutzkolloid vorzulegen und die Monomeren - Alkylvinylether und gegebenenfalls Olefin und Maleinsäureanhydrid - gemeinsam zuzudosieren. Die Zulaufzeiten für Monomer und Initiator betragen im allgemeinen zwischen 1 und 10 Stunden, vorzugsweise 2 bis 5 Stunden. Es ist auch möglich, alle Einsatzstoffe gemeinsam in einem Reaktor zu polymerisieren, wobei jedoch Probleme mit der Wärmeabführung auftreten können, so daß eine solche Arbeitsweise weniger zweckmäßig ist. Die Konzentrationen der zu polymerisierenden Monomeren liegen zwischen 20 und 80 Gew.-%, bevorzugt 30 bis 70 Gew.-%. Aus den Polymerisatsuspensionen können die Polymeren direkt in Verdampfern wie beispielsweise Bandtrocknern, Schaufeltrocknern, Sprühtrocknern und Wirbelbett-Trocknern, isoliert werden. Die Fällungs- und Suspensionspolymerisation ist besonders geeignet zur Herstellung von Copolymerisaten aus Maleinsäureanhydrid, Alkylvinylethern und Olefinen mit 8 bis 12 C-Atomen. Falls höherkettige Alkylvinylether und gegebenenfalls Olefine verwendet werden, kann bereits der Fall eintreten, daß die gebildeten Copolymeren in den genannten Lösemittel löslich sind, so daß die Polymerisation bereits als Lösungspolymerisation anzusehen ist.

Die Lösungspolymerisation wird in Lösemitteln durchgeführt, in denen die Monomeren und die gebildeten Copolymeren löslich sind. Es sind hierfür alle Lösemittel geeignet, die diese Vorgabe erfüllen und die mit den Monomeren keine Reaktionen eingehen. Beispielsweise sind dies Aceton, Methylethylketon, Diethylketon, Methylisobutylketon, Ethylacetat, Butylacetat, Tetrahydrofuran und Dioxan, wobei zur Erzielung niedermolekularer Copolymerer Tetrahydrofuran und Dioxan besonders gut geeignet sind. Wie bei der Substanz-, Suspensions- und Fällungspolymerisation ist es auch hier zweckmäßig, das Lösemittel und eine Monomerkomponente vorzulegen und die zweite Komponente mit dem Initiator und gegebenenfalls Co-Initiator und Regler zuzudosieren. Dabei können Lösungsmittel und Maleinsäureanhydrid im Polymerisationsreaktor vorgelegt und nach Erreichen der Polymerisationstemperatur dann der Alkylvinylether und gegebenenfalls das Olefin und der Initiator sowie gegebenenfalls Coinitiator und Regler zudosiert werden. Günstiger ist es jedoch, Lösemittel und Alkylvinylether und gegebenenfalls Olefin vorzulegen und das Maleinsäureanhydrid sowie den Initiator und gegebenenfalls den Coinitiator und Regler bei der gewählten Polymerisationstemperatur zuzudosieren. Diese Arbeitsweise liefert weniger gefärbte Polymerlösungen. Die Konzentrationen der zu polymerisierenden Monomeren liegen zwischen 20 und 80 Gew.-%, bevorzugt 30 und 70 Gew.-%. Das feste Copolymer kann problemlos durch Verdampfen des Lösemittels isoliert werden. Aber auch hier ist es zweckmäßig, ein Lösemittel zu wählen, in dem die weitere Umsetzung zum Ammonium-, Alkali- bzw. Erdalkalimetallsalz und mit Alkoholen und/oder Ammoniak oder Aminen erfolgen kann.

Die in der ersten Verfahrensstufe erhaltenen Copolymeren aus Alkylvinylethern und gegebenenfalls Olefinen und Maleinsäureanhydrid oder den anderen in Betracht kommenden ethylenisch ungesättigten Carbonsäureanhydriden werden anschließend ganz oder teilweise zu den Ammonium-, Alkalimetall- bzw. Erdalkalimetallsalzen umgesetzt und, falls die Umsetzung zu den Ammonium-, Alkalimetall- bzw. Erdalkalimetallsalzen nur teilweise erfolgt, gegebenenfalls mit Alkoholen und/oder Aminen zu den Estern und/oder Aminen und/oder Ammoniumsalzen umgesetzt. Es ist jedoch ebenso möglich, die anschließende Umsetzung der Copolymeren in umgekehrter Reihenfolge durchzuführen, indem die Copolymeren zunächst mit Aminen, Ammoniak und/oder Alkoholen zu den entsprechenden Estern und/oder Amiden und/oder Ammoniumsalzen solvolysiert werden und danach in die Salze, beispielsweise in die Alkalimetall- bzw. Erdalkalimetallsalze übergeführt werden.

Die nach den oben beschriebenen Polymerisationsverfahren hergestellten Copolymerisate werden nach dem Abkühlen auf Raumtemperatur oder vorzugsweise in Form einer Schmelze, die eine Temperatur in dem Bereich von 80 bis 180°C, vorzugsweise 90 bis 150°C hat, solvolysiert. Die Solvolyse der Anhydridgruppen der Copolymerisate besteht im einfachsten Fall in einer Hydrolyse und anschließender Neutralisation. Es ist besonders vorteilhaft, in druckdichten Apparaturen zu arbeiten und darin direkt durch Zugabe von Wasser zu einer Schmelze der bei der Substanzpolymerisation erhältlichen Copolymerisate die Anhydridgruppen in Carboxylgruppen zu überführen und durch anschließende Zugabe von Basen mindestens 10 % der Carboxylgruppen der hydrolysierten Copolymerisate zu neutralisieren. Hydrolyse und Neutralisation können jedoch auch praktisch gleichzeitig durch Zugabe verdünnter wäßriger Basen zur Copolymerisatschmelze vorgenommen werden. Die Mengen an Wasser und an Neutralisationsmittel werden dabei so gewählt, daß 10 bis 60, vorzugsweise 20 bis 55 Gew.-% Feststoffe enthaltende Dispersionen oder Lösungen entstehen, die in den Handel gebracht werden. Daraus werden dann Präparationslösungen durch Verdünnen auf Feststoffgehalte von 0,5 bis 50 Gew.-% hergestellt.

Die durch Polymerisation der Monomeren (a) und (b) erhältlichen Copolymerisate können auch durch Zugabe von primären und/oder sekundären Aminen solvolysiert werden. Die Solvolyse wird dabei mit solchen Mengen an Aminen durchgeführt, daß 10 bis 50 % der aus den einpolymerisierten Monomeren (b) insgesamt bei einer vollständigen Hydrolyse entstehenden Carboxylgruppen amidiert sind. Nach der Bildung von Halbamid-Gruppen im Copolymerisat erfolgt die Neutralisation. Sie wird soweit geführt, daß mindestens 10 % der Carboxylgruppen des bei der Substanzpolymerisation anfallenden Copolymerisates neutralisiert werden.

Ferner kann auch mit Aminocarbonsäuren sowie Salzen von Aminocarbonsäuren, vorzugsweise die Alkalimetallsalze, solvolysiert werden. Besonders bevorzugt werden Alkalimetallsalze von α-Aminocarbonsäuren eingesetzt, wobei die Alkalimetallsalze des Sarcosins ganz besonders vorteilhaft sind. Die Solvolyse mittels Salzen von Aminocarbonsäuren wird zweckmäßigerweise in wäßrigem Medium ausgeführt. Die Solvolyse wird dabei mit solchen Mengen an Aminocarboxylaten durchgeführt, daß 10 bis 50 % der aus den einpolymerisierten Monomeren (b) insgesamt bei einer vollständigen Hydrolyse entstehenden Carboxylgruppen amidiert sind. Nach der Bildung von Halbamid-Gruppen im Copolymerisat erfolgt die Neutralisation. Sie wird soweit geführt, daß mindestens 10 % der Carboxylgruppen des bei der Substanzpolymerisation anfallenden Copolymerisats neutralisiert werden.

Die Solvolyse kann auch durch Zugabe von Alkoholen zu einer Schmelze der bei der Substanzpolymerisation erhältlichen Copolymerisate vorgenommen werden. Man setzt dabei solche Mengen an Alkohol ein, daß 10 bis 50 % der aus den einpolymerisierten Dicarbonsäureeinheiten insgesamt entstehenden Carboxylgruppen verestert werden. Anschließend erfolgt eine Neutralisation, bei der mindestens 10 % der insgesamt aus dem Anhydridgruppen enthaltenden Copolymerisat entstehenden Carboxylgruppen neutralisiert sind.

Vorzugsweise werden jeweils 20 bis 50 % der aus den einpolymerisierten Dicarbonsäureanhydriden insgesamt entstehenden Carboxylgruppen amidiert oder verestert. Als Neutralisationsmittel eignen sich beispielsweise Ammoniak, Amine, Alkalimetall- und Erdalkalimetallbasen, z.B. Natronlauge, Kalilauge, Natriumbicarbonat, Soda, Kaliumcarbonat, Magnesiumhydroxid, Calciumhydroxid, Bariumhydroxid sowie sämtliche Amine, die auch zur Amidierung der Copolymerisate eingesetzt werden. Vorzugsweise erfolgt die Neutralisation durch Zugabe von wäßriger Natronlauge zum Copolymerisat. Die Neutralisation der Anhydridgruppen enthaltenden Copolymerisate wird mindestens bis zu einem solchen Grad durchgeführt, daß man in Wasser dispergierbare Copolymerisate erhält. Dieser Neutralisationsgrad liegt bei mindestens 10 % der insgesamt aus den Anhydridgruppen entstehenden Carboxylgruppen. Der Neutralisationsgrad ist außerdem von der Kettenlänge des jeweils verwendeten Alkylvinylethers und/oder Olefins der Komponente (a) abhängig. Um gut in Wasser dispergierbare bzw. kolloidal lösliche Copolymerisate zu erhalten, wird beispielsweise ein Copolymerisat aus einem C₃₀-Alkylvinylether und Maleinsäureanhydrid zu mindestens 75 % neutralisiert, während beispielsweise ein Copolymerisat aus einem C₂₀-Alkylvinylether und Maleinsäureanhydrid bei einem Neutralisationsgrad von 50 % der aus diesem Copolymerisat entstehenden Carboxylgruppen bereits gut in Wasser dispergierbar ist. Bei einem Copolymerisat aus einem C₁₂-Alkylvinylether und Maleinsäureanhydrid reicht bereits ein Neutralisationsgrad von 20 % der aus dem einpolymerisierten Maleinsäureanhydrid entstehenden Carboxylgruppen für das Dispergieren des Copolymerisats in Wasser aus.

Zur Amidbildung kann man Ammoniak und primäre und sekundäre Amine einsetzen. Die Amidbildung erfolgt vorzugsweise in Abwesenheit von Wasser durch Reaktion der Anhydridgruppen des Copolymerisats mit Ammoniak oder den Aminen. Die in Betracht kommenden primären und sekundären Amine können 1 bis 40, vorzugsweise 3 bis 30 Kohlenstoffatome aufweisen. Geeignete Amine sind beispielsweise Methylamin, Ethylamin, n-Propylamin, Isopropylamin, n-Butylamin, Isobutylamin, Hexylamin, Cyclohexylamin, Methylcyclohexylamin, 2-Ethylhexylamin, n-Octylamin, Isotridecylamin, Talgfettamin, Stearylamin, Oleylamin, Dimethylamin, Diethylamin, Di-n-Propylamin, Di-Isopropylamin, Di-n-Butylamin, Di-Isobutylamin, Dihexylamin, Di-Cyclohexylamin, Di-Methylcyclohexylamin, Di-2-Ethylhexylamin, Di-n-Octylamin, Di-Isotridecylamin, Di-Talgfettamin, Di-Stearylamin, Di-Oleylamin, Ethanolamin, Di-Ethanolamin, n-Propanolamin, Di-n-Propanolamin und Morpholin. Vorzugsweise wird Morpholin verwendet.

Um die bei der Polymerisation erhaltenen Anhydridgruppen aufweisenden Copolymerisate partiell zu verestern, werden sie mit Alkoholen umgesetzt. Auch die Veresterung erfolgt vorzugsweise unter Ausschluß von Wasser. Geeignete Alkohole können 1 bis 40, vorzugsweise 3 bis 30 C-Atome enthalten. Es können primäre, sekundäre und tertiäre Alkohole Verwendung finden. Man kann sowohl gesättigte aliphatische Alkohole als auch ungesättigte Alkohole, wie beispielsweise Oleylalkohol, einsetzen. Vorzugsweise werden einwertige, primäre oder sekundäre Alkohole verwendet, z.B. Methanol, Ethanol, n-Propanol, Isopropanol, n-Butanol, Isobutanol, n-Pentanol und Isomere, n-Hexanol und Isomere, n-Octanol und Isomere, wie z.B. 2-Ethylhexanol, Nonanole, Decanole, Dodecanole, Tridecanole, Cyclohexanol, Talgfettalkohol, Stearylalkohol sowie die technisch durch Oxosynthese leicht zugänglichen Alkohole bzw. Alkoholgemische mit 9 bis 19 C-Atomen, wie z.B. C_{9/11}-Oxoalkohol, C_{13/15}-Oxoalkohol sowie Ziegleralkohole, die unter den Namen Alfol bekannt sind mit 12 bis 24 C-Atomen. Vorzugsweise verwendet man Alkohole mit 4 bis 24 C-Atomen, wie z.B. n-Butanol, Isobutanol, Amylalkohol, 2-Ethylhexanol, Tridecanol, Talgfettalkohol, Stearylalkohol, C_{9/11}-Oxoalkohol, C_{13/15}-Oxoalkohol, C_{12/14}-Alfole und C_{16/18}-Alfole.

Nach der partiellen Umwandlung der Anhydridgruppen in Halbamid- oder Halbester-Gruppen erfolgt die Hydrolyse der noch vorhandenen Anhydridgruppen des Copolymerisats. Die Hydrolyse der restlichen Anhydridgruppen des Copolymerisats kann auch gleichzeitig mit der noch erforderlichen partiellen Neutralisation vorgenommen werden, indem man eine wäßrige Base zu dem partiell amidierten bzw. veresterten und noch Anhydridgruppen enthaltenden Copolymerisat zusetzt. Die Menge an Wasser und Basen wird so gewählt, daß die Konzentration der Copolymerisatdispersion oder Lösung vorzugsweise 20 bis 55 Gew.-% beträgt. Der pH-Wert der gebrauchsfertigen Mittel zum Hydrophobieren liegt in dem Bereich von etwa 4 bis 10.

Die so erhältlichen wäßrigen Copolymerisatdispersionen sind beständig und lagerstabil. Sie eignen sich in hervorragender Weise zur Veredlung von Leder und Pelzfellen, weil sie eine besonders ausgeprägte hydrophobierende Wirkung aufweisen und darüberhinaus noch eine fettende und nachgerbende Wirkung entfalten. Das mit diesen Copolymerisatdispersionen behandelte Leder- und Pelzmaterial zeigt nur noch eine geringe Wasseraufnahmebereitschaft und Wasserdurchlässigkeit. Die Dispersionen wirken gleichzeitig weichmachend, so daß man in den meisten Fällen keine zusätzlichen Fettungsmittel auf Basis natürlicher oder synthetischer Lickeröle benötigt. Die Dispersionen verleihen der Ware eine hohe Fülle und hohe Zug- und Weiterreißfestigkeiten, so daß eine zusätzliche Behandlung mit handelsüblichen Nachgerbstoffen, beispielsweise mit vegetabilen Gerbstoffen oder synthetischen organischen Gerbstoffen (Synthanen) auf Basis von Phenolsulfonsäure/Phenol/Formaldehyd-Kondensationsprodukten in den meisten Fällen nicht mehr erforderlich ist.

Ein weiterer Vorteil der erfindungsgemäß zu verwendenden wäßrigen Dispersionen besteht darin, daß sie keine zusätzlichen Emulgatoren enthalten. Leder und Pelzfelle, die mit emulgatorhaltigen Produkten behandelt worden sind, müssen bekanntlich nach der Behandlung mit diesen Mitteln aufwendigen Prozessen, wie z.B. Nachbehandlung mit mehrwertigen Metallsalzen unterworfen werden, um die Emulgatoren im Leder oder in den Pelzfellen unwirksam zu machen.

Die oben beschriebenen Copolymerisatdispersionen bzw. Copolymerisatlösungen eignen sich zur Behandlung von allen üblichen gegerbten Häuten, insbesondere mit Mineralgerbstoffen, wie Chrom-III-salzen gegerbten Häuten. Die gegerbten Häute werden üblicherweise vor der Behandlung entsäuert. Sie können bereits vor der Behandlung gefärbt worden sein. Eine Färbung kann jedoch auch erst nach der erfindungsgemäß erfolgenden Hydrophobierung vorgenommen werden.

Die gegerbten Häute werden mit den wäßrigen Dispersionen zweckmäßigerweise in wäßriger Flotte, die durch Verdünnen der Copolymerisatdispersionen mit Wasser erhältlich sind, bei pH-Werten von 4 bis 10, vorzugsweise 5 bis 8 und Temperaturen von 20 bis 60, vorzugsweise 30 bis 50°C während eines Zeitraums von 0,1 bis 5, insbesondere 0,5 bis 2 Stunden, behandelt. Diese Behandlung erfolgt beispielsweise durch Walken in einem Faß. Die benötigte Menge an Copolymerisatdispersion bzw. -lösung beträgt, bezogen auf das Falzgewicht des Leders oder das Naßgewicht der Pelzfelle, 0,1 bis 30, vorzugsweise 1 bis 20 Gew.-%. Die Flottenlänge, d.h. das prozentuale Gewichtsverhältnis der Behandlungsflotte zur Ware, bezogen auf das Falzgewicht des Leders bzw. das Naßgewicht der Pelzfelle, beträgt üblicherweise 10 bis 1000, vorzugsweise 30 bis 150 %, bei Pelzfellen 50 bis 500 %.

Nach der Behandlung mit der oben beschriebenen wäßrigen Flotte wird der pH-Wert der Behandlungsflotte durch Zusatz von Säuren, vorzugsweise verwendet man organische Säuren, wie Ameisensäure, auf einen pH-Wert von 3 bis 5, vorzugsweise 3,5 bis 4 eingestellt.

Bei Mitverwendung von üblichen Nachgerbstoffen beim Veredlungsprozess des Leders und der Pelzfelle kann die Behandlung mit den erfindungsgemäß zu verwendenden wäßrigen Dispersionen oder Lösungen vor oder nach dem Nachgerbeschritt oder auch mehrstufig erfolgen, wobei die wäßrigen Dispersionen oder Lösungen anteilsweise vor, während und nach dem Nachgerbungsschritt eingesetzt werden. Die als Hydrophobierungsmittel zu verwendenden wäßrigen Dispersionen oder Lösungen können auch zusammen mit üblichen Leder- und Pelzveredlungsmitteln, wie Hydrophoblickern auf Paraffinbasis, verwendet werden. Dadurch wird in einigen Fällen die Hydrophobierungs-, Fettungs- und Nachgerbwirkung verbessert.

Die Prozentangaben in den Beispielen sind, falls nicht anders angegeben, Gewichtsprozent. Die Molmassen der Copolymeren wurden durch Gelpermeationschromatographie bestimmt, wobei als Elutionsmittel Tetrahydrofuran und zur Eichung eng verteilte Fraktionen von Polystyrol eingesetzt wurden. Die Prüfung der behandelten Leder auf Wasseraufnahmebereitschaft und Wasserdurchlässigkeit erfolgte mit dem Bally-Penetrometer gemäß der Meßmethode IUP 10 der Internationalen Union der Leder-Chemiker-Verbände, Kommission für physikalische Lederprüfung, vgl. das Leder, Band 12, 36 bis 40 (1961).

### Herstellung der wäßrigen Copolymerisatdispersionen

### Dispersion I

In einem Reaktor aus Edelstahl, der mit einem Rührer, Zulaufvorrichtungen und einer Vorrichtung für das Arbeiten unter Stickstoff ausgestattet war, wurden 299 g (1,01 mol) n-Octadecylvinylether unter ständigem Rühren in einem schwachen Stickstoffstrom auf eine Temperatur von 160°C erhitzt. Sobald diese Temperatur erreicht war, gab man innerhalb von 3 Stunden 98 g (1 mol) flüssiges Maleinsäureanhydrid und separat davon 9 g Di-tert.-Butylperoxid gleichmäßig zu. Die Polymerisationstemperatur wurde in dem Bereich von 155 bis 160°C gehalten. Nach Abschluß der Maleinsäureanhydrid- und Peroxidzugabe erhitzte man das Reaktionsgemisch noch 2 Stunden bei einer Temperatur von 160°C unter ständigem Rühren und kühlte es dann auf 120°C ab. Der Reaktor wurde druckdicht verschlossen und die Copolymerisatschmelze bei einer Temperatur von 120°C unter Druck solvolysiert, indem man zu der Schmelze innerhalb von 1 Stunde bei der angegebenen Temperatur gleichzeitig 80 g 50 %ige wäßrige Natronlauge (1 mol) und 972 g auf 90°C erwärmtes Wasser unter intensivem Rühren (ca. 400 Upm) zudosiert. Das Reaktionsgemisch wurde noch 2 Stunden bei 120°C gerührt und dann abgekühlt. Man erhielt eine schwach viskose Dispersion mit einem Feststoffgehalt von 30,4 %. Die Molmasse des Copolymeren vor der Neutralisation betrug 4500 g pro Mol.

### Polymerdispersion II

In dem oben beschriebenen Reaktor wurden 236,8 g (0,8 mol) n-Octadecylvihylether und 51 g (0,202 mol) n-Octadecen-1 vorgelegt und in einem schwachen Stickstoffstrom auf eine Temperatur von 170°C erhitzt. Sobald die Temperatur von 170°C erreicht war, gab man unter ständigem Rühren innerhalb von 4 Stunden 98 g (1 mol) flüssiges Maleinsäureanhydrid und separat davon 12 g Di-tert.-Butylperoxid in flüssiger Form gleichmäßig zu. Danach wurde das Reaktionsgemisch noch 2 Stunden bei 170°C gerührt und auf 120°C abgekühlt. Bei dieser Temperatur fügte man innerhalb einer halben Stunde 87 g (1 mol) Morpholin zu und erhitzte die Mischung noch 2 Stunden auf 120°C. Danach wurde es auf eine Temperatur von 95°C abgekühlt und innerhalb von einer Stunde durch gleichzeitige Zugabe von 80 g 50 %iger wäßriger Natronlauge (1 mol) und 1365 g Wasser versetzt, das auf eine Temperatur von 90°C erhitzt worden war. Die Reaktionsmischung wurde noch 2 Stunden bei einer Temperatur von 90 bis 95°C gerührt und danach abgekühlt. Die bei Raumtemperatur schwach viskose wäßrige Dispersion hatte einen Feststoffgehalt von 25,8 %. Die Molmasse des Copolymerisats vor der Morpholinzugabe betrug 3900 g pro Mol.

### Beispiel 1

Chromgegerbtes Rindleder mit einer Falzstärke von 1,8 mm, das auf einen pH-Wert von 5,0 entsäuert worden war, wurde mit 15 % der Dispersion I, bezogen auf Falzgewicht, 2 Stunden bei 40°C im Gerbfaß gewalkt. Die Gesamt-Flottenlänge lag bei 100 %.

Anschließend wurde das Leder mit 2 Gew.-% Mimosaextrakt nachgegerbt und mit 1 Gew.-% eines handelsüblichen anionischen Anilinfarbstoffs gefärbt. Danach wurde das Leder mit Ameisensäure auf einen pH-Wert von 3,7 eingestellt. Es wurde anschließend gewaschen, mechanisch ausgereckt und getrocknet.

Das erhaltene Leder war voll und weich im Griff, gleichmäßig gefärbt und zeigte eine sehr gute dynamische Wasserfestigkeit. Die Prüfung mit dem Bally-Penetrometer ergab bei 15 % Stauchung für die Wasseraufnahme nach 24 Stunden einen Wert von 21,2 % und ließ während dieser Zeitspanne keinen Wasserdurchtritt erkennen.

### Beispiel 2

Chromgegerbtes Rindleder mit einer Falzstärke von 1,8 mm, das auf einen pH-Wert von 5,0 entsäuert war, wurde mit 20 % der Dispersion II und gleichzeitig mit 5 % einer 42 %igen wäßrigen Dispersion eines handelsüblichen Hydrophoblickers auf Paraffinbasis, jeweils bezogen auf das Falzgewicht des Leders, 2 Stunden bei 40°C im Gerbfaß gewalkt. Die gesamte Flottenlänge lag bei 150 %. Im Anschluß an diese Behandlung wurde das Leder mit Ameisensäure auf einen pH-Wert von 3,8 gebracht und wie üblich fertiggestellt.

Das erhaltene Leder war außerordentlich weich und angenehm im Griff und zeigte eine hohe Wasserresistenz. Die Prüfung mit dem Bally-Penetrometer ergab bei 15 % Stauchung für die Wasseraufnahme nach 24 Stunden einen Wert von 17,1 % und ließ während dieser Zeitspanne keinen Wasserdurchtritt erkennen.

## Patentansprüche (Patentansprüche für folgende(n) Vertragsstaat(en): CH, DE, DK, FR, GB, IT, LI, NL)

1. Verwendung von Copolymerisaten, die durch radikalische Copolymerisation von
(a) C₈- bis C₄₀-Alkylvinylethern oder Mischungen aus C₈- bis C₄₀-Alkylvinylethern und bis zu 50 mol-% C₈- bis C₄₀-Monoolefinen mit
(b) ethylenisch ungesättigten C₄- bis C₈-Dicarbonsäureanhydriden
zu Copolymerisaten mit Molmassen von 500 bis 20 000 g/Mol, anschließende Solvolyse der Anhydridgruppen der Copolymerisate und zumindest partielle Neutralisation der bei der Solvolyse entstehenden Carboxylgruppen in wäßrigem Medium mit Basen erhältlich sind und die in Form von wäßrigen Lösungen oder Dispersionen vorliegen, als Mittel zum Hydrophobieren von Leder und Pelzfellen.

2. Verwendung nach Anspruch 1, dadurch gekennzeichnet, daß die Anhydridgruppen enthaltenden Copolymerisate nach Art einer Substanzpolymerisation der Monomeren (a) und (b) bei Temperaturen von 80 bis 300°C erhältlich sind und daß die dabei entstehende Schmelze der Copolymerisate solvolysiert und partiell neutralisiert wird.

3. Verwendung nach Anspruch 1 oder 2, dadurch gekennzeichnet, daß man die Solvolyse durch Zugabe von Wasser zu den bei der Polymerisation erhältlichen Copolymerisaten durchführt und mindestens 10 % der Carboxylgruppen der hydrolysierten Copolymerisate mit Ammoniak, Aminen, Alkalimetall- oder Erdalkalimetallbasen neutralisiert.

4. Verwendung nach Anspruch 1 oder 2, dadurch gekennzeichnet, daß man die Solvolyse durch Zugabe von primären und/oder sekundären Aminen zu den bei der Polymerisation erhältlichen Copolymerisaten so durchführt, daß 10 bis 50 % der aus den einpolymerisierten Monomeren (b) insgesamt entstehenden Carboxylgruppen amidiert und mindestens 10 % der insgesamt entstehenden Carboxylgruppen neutralisiert sind.

5. Verwendung nach Anspruch 1 oder 2, dadurch gekennzeichnet, daß man die Solvolyse durch Zugabe von Alkoholen zu den bei der Polymerisation erhältlichen Copolymerisaten so durchführt, daß 10 bis 50 % der aus den einpolymerisierten Monomeren (b) insgesamt entstehenden Carboxylgruppen verestert und mindestens 10 % der insgesamt entstehenden Carboxylgruppen neutralisiert sind.

6. Verwendung nach Anspruch 1 oder 2, dadurch gekennzeichnet, daß man die Solvolyse in wäßrigem Medium durch Zugabe von Salzen von Aminocarbonsäuren so durchführt, daß 10 bis 50 % der aus den einpolymerisierten Monomeren (b) insgesamt entstehenden Carboxylgruppem amidiert und mindestens 10 % der insgesamt entstehenden Carboxylgruppen neutralisiert sind.

## Patentansprüche (Patentansprüche für folgende(n) Vertragsstaat(en): ES)

1. Verfahren zum Hydrophobieren von Leder und Pelzfellen, dadurch gekennzeichnet, daß man hierbei Copolymerisate, die durch radikalische Copolymerisation von
(a) C₈- bis C₄₀-Alkylvinylethern oder Mischungen aus C₈- bis C₄₀-Alkylvinylethern und bis zu 50 mol-% C₈- bis C₄₀-Monoolefinen mit
(b) ethylenisch ungesättigten C₄- bis C₈-Dicarbonsäureanhydriden
zu Copolymerisaten mit Molmassen von 500 bis 20 000 g/Mol, anschließende Solvolyse der Anhydridgruppen der Copolymerisate und zumindest partielle Neutralisation der bei der Solvolyse entstehenden Carboxylgruppen in wäßrigem Medium mit Basen erhältlich sind und die in Form von wäßrigen Lösungen oder Dispersionen vorliegen, verwendet.

2. Verfahren nach Anspruch 1, dadurch gekennzeichnet, daß die Anhydridgruppen enthaltenden Copolymerisate nach Art einer Substanzpolymerisation der Monomeren (a) und (b) bei Temperaturen von 80 bis 300°C erhältlich sind und daß die dabei entstehende Schmelze der Copolymerisate solvolysiert und partiell neutralisiert wird.

3. Verfahren nach Anspruch 1 oder 2, dadurch gekennzeichnet, daß man die Solvolyse durch Zugabe von Wasser zu den bei der Polymerisation erhältlichen Copolymerisaten durchführt und mindestens 10 % der Carboxylgruppen der hydrolysierten Copolymerisate mit Ammoniak, Aminen, Alkalimetall- oder Erdalkalimetallbasen neutralisiert.

4. Verfahren nach Anspruch 1 oder 2, dadurch gekennzeichnet, daß man die Solvolyse durch Zugabe von primären und/oder sekundären Aminen zu den bei der Polymerisation erhältlichen Copolymerisaten so durchführt, daß 10 bis 50 % der aus den einpolymerisierten Monomeren (b) insgesamt entstehenden Carboxylgruppen amidiert und mindestens 10 % der insgesamt entstehenden Carboxylgruppen neutralisiert sind.

5. Verfahren nach Anspruch 1 oder 2, dadurch gekennzeichnet, daß man die Solvolyse durch Zugabe von Alkoholen zu den bei der Polymerisation erhältlichen Copolymerisaten so durchführt, daß 10 bis 50 % der aus den einpolymerisierten Monomeren (b) insgesamt entstehenden Carboxylgruppen verestert und mindestens 10 % der insgesamt entstehenden Carboxylgruppen neutralisiert sind.

6. Verfahren nach Anspruch 1 oder 2, dadurch gekennzeichnet, daß man die Solvolyse in wäßrigem Medium durch Zugabe von Salzen von Aminocarbonsäuren so durchführt, daß 10 bis 50 % der aus den einpolymerisierten Monomeren (b) insgesamt entstehenden Carboxylgruppem amidiert und mindestens 10 % der insgesamt entstehenden Carboxylgruppen neutralisiert sind.

## Claims (Claims for the following Contracting State(s): CH, DE, DK, FR, GB, IT, LI, NL)

1. Use of a copolymer which is obtainable by free radical copolymerization of
(a) C₈-C₄₀-alkyl vinyl ethers or a mixture of C₈-C₄₀-alkyl vinyl ethers and not more than 50 mol % of C₈-C₄₀-monoolefins with
(b) ethylenically unsaturated C₄-C₈-dicarboxylic anhydrides
to give a copolymer having a molecular weight of from 500 to 20,000 g/mol, subsequent solvolysis of the anhydride groups of the copolymer and partial or complete neutralization of the carboxyl groups formed during the solvolysis, in an aqueous medium by means of a base, and which is present in the form of an aqueous solution or dispersion, as an agent for rendering leathers and skins water-repellent.

2. Use as claimed in claim 1, wherein the anhydride-containing copolymer is obtainable by mass polymerization of the monomers (a) and (b) at from 80 to 300°C, and the resulting melt of the copolymer is subjected to solvolysis and partially neutralized.

3. Use as claimed in claim 1 or 2, wherein the solvolysis is carried out by adding water to the copolymer obtainable in the polymerization, and not less than 10% of the carboxyl groups of the hydrolyzed copolymer are neutralized with ammonia, an amine or an alkali metal or alkaline earth metal base.

4. Use as claimed in claim 1 or 2, wherein the solvolysis is carried out by adding primary and/or secondary amines to the copolymer obtainable in the polymerization, in such a way that from 10 to 50% of the total amount of carboxyl groups formed from the polymerized monomers (b) undergo amidation and not less than 10% of the total amount of carboxyl groups formed are neutralized.

5. Use as claimed in claim 1 or 2, wherein the solvolysis is carried out by adding an alcohol to the copolymer obtainable in the polymerization, in such a way that from 10 to 50% of the total amount of carboxyl groups formed from the polymerized monomers (b) are esterified and not less than 10% of the total amount of carboxyl groups formed are neutralized.

6. Use as claimed in claim 1 or 2, wherein the solvolysis is carried out in an aqueous medium by adding a salt of an aminocarboxylic acid, in such a way that from 10 to 50% of the total amount of carboxyl groups formed from the polymerized monomers (b) undergo amidation and not less than 10% of the total amount of carboxyl groups formed are neutralized.

## Claims (Claims for the following Contracting State(s): ES)

1. A process for rendering leathers and skins water-repellent, which comprises using a copolymer which is obtainable by free radical copolymerization of
(a) C₈-C₄₀-alkyl vinyl ethers or a mixture of C₈-C₄₀-alkyl vinyl ethers and not more than 50 mol % of C₈-C₄₀-monoolefins with
(b) ethylenically unsaturated C₄-C₈-dicarboxylic anhydrides
to give a copolymer having a molecular weight of from 500 to 20,000 g/mol, subsequent solvolysis of the anhydride groups of the copolymer and partial or complete neutralization of the carboxyl groups formed during the solvolysis, in an aqueous medium by means of a base, and which is present in the form of an aqueous solution or dispersion.

2. A process as claimed in claim 1, wherein the anhydride-containing copolymer is obtainable by mass polymerization of the monomers (a) and (b) at from 80 to 300°C, and the resulting melt of the copolymer is subjected to solvolysis and partial neutralization.

3. A process as claimed in claim 1 or 2, wherein the solvolysis is carried out by adding water to the copolymer obtainable in the polymerization, and not less than 10% of the carboxyl groups of the hydrolyzed copolymer are neutralized with ammonia, an amine or an alkali metal or alkaline earth metal base.

4. A process as claimed in claim 1 or 2, wherein the solvolysis is carried out by adding primary and/or secondary amines to the copolymer obtainable in the polymerization, in such a way that from 10 to 50% of the total amount of carboxyl groups formed from the polymerized monomers (b) undergo amidation and not less than 10% of the total amount of carboxyl groups formed are neutralized.

5. A process as claimed in claim 1 or 2, wherein the solvolysis is carried out by adding an alcohol to the copolymer obtainable in the polymerization, in such a way that from 10 to 50% of the total amount of carboxyl groups formed from the polymerized monomers (b) are esterified and not less than 10% of the total amount of carboxyl groups formed are neutralized.

6. A process as claimed in claim 1 or 2, wherein the solvolysis is carried out in an aqueous medium by adding a salt of an aminocarboxylic acid, in such a way that from 10 to 50% of the total amount of carboxyl groups formed from the polymerized monomers (b) undergo amidation and not less than 10% of the total amount of carboxyl groups formed are neutralized.

## Revendications (Revendications pour l'(les) Etat(s) contractant(s) suivant(s): CH, DE, DK, FR, GB, IT, LI, NL)

1. Utilisation, comme agents pour l'imperméabilisation de cuirs et de peaux, de copolymères qui sont obtenus par copolymérisation radicalaire
a) d'oxydes de vinyle et d'alkyle en C₈-C₄₀ ou de mélanges d'oxydes de vinyle et d'alkyle en C₈-C₄₀ et de 50% en moles au maximum de monooléfines en C₈-C₄₀, avec
b) des anhydrides d'acides dicarboxyliques en C₄-C₈ à insaturation éthylénique,
en copolymères ayant des masses molaires de 500 à 20 000 g/mole, suivie de solvolyse des groupements anhydride des copolymères et de neutralisation au moins partielle des groupements carboxyle résultant de la solvolyse, en milieu aqueux par des bases, et qui se présentent sous forme de solutions ou de dispersions aqueuses.

2. Utilisation selon la revendication 1, caractérisée en ce que les copolymères contenant des groupements anhydride sont obtenus d'après une sorte de polymérisation en masse des monomères (a) et (b) à des températures de 80 à 300°C, et en ce que la masse fondue des copolymères ainsi formée est solvolysée et neutralisée partiellement.

3. Utilisation selon la revendication 1 ou 2, caractérisée en ce qu'on conduit la solvolyse par addition d'eau aux copolymères obtenus lors de la polymérisation, et on neutralise au moins 10% des groupements carboxyle des copolymères hydrolysés, par de l'ammoniac, des amines ou des bases de métaux alcalins ou de métaux alcalino-terreux.

4. Utilisation selon la revendication 1 ou 2, caractérisée en ce qu'on conduit la solvolyse par addition d'amines primaires et/ou secondaires aux copolymères obtenus lors de la polymérisation, de telle sorte que 10 à 50% des groupements carboxyle provenant au total des monomères (b) contenus en liaison polymère soient amidés et qu'au moins 10% des groupements carboxyle formés au total soient neutralisés.

5. Utilisation selon la revendication 1 ou 2, caractérisée en ce qu'on conduit la solvolyse par addition d'alcools aux copolymères obtenus lors de la polymérisation, de telle sorte que 10 à 50% des groupements carboxyle provenant au total des monomères (b) contenus en liaison polymère soient estérifiés et qu'au moins 10% des groupements carboxyle formés au total soient neutralisés.

6. Utilisation selon la revendication 1 ou 2, caractérisée en ce qu'on conduit la solvolyse en milieu aqueux par addition de sels d'acides aminocarboxyliques, de telle sorte que 10 à 50% des groupements carboxyle provenant au total des monomères (b) contenus en liaison polymère soient amidés et qu'au moins 10% des groupements carboxyle formés au total soient neutralisés.

## Revendications (Revendications pour l'(les) Etat(s) contractant(s) suivant(s): ES)

1. Procédé d'imperméabilisation de cuirs et de peaux, caractérisé en ce qu'on utilise à cet effet des copolymères qui sont obtenus par copolymérisation radicalaire
a) d'oxydes de vinyle et d'alkyle en C₈-C₄₀ ou de mélanges d'oxydes de vinyle et d'alkyle en C₈-C₄₀ et de 50% en moles au maximum de monooléfines en C₈-C₄₀, avec
b) des anhydrides d'acides dicarboxyliques en C₄-C₈ à insaturation éthylénique,
en copolymères ayant des masses molaires de 500 à 20 000 g/mole, suivie de solvolyse des groupements anhydride des copolymères et de neutralisation au moins partielle des groupements carboxyle résultant de la solvolyse, en milieu aqueux par des bases, et qui se présentent sous forme de solutions ou de dispersions aqueuses.

2. Procédé selon la revendication 1, caractérisé en ce que les copolymères contenant des groupements anhydride sont obtenus d'après une sorte de polymérisation en masse des monomères (a) et (b) à des températures de 80 à 300°C, et en ce que la masse fondue des copolymères ainsi formée est solvolysée et neutralisée partiellement.

3. Procédé selon la revendication 1 ou 2, caractérisé en ce qu'on conduit la solvolyse par addition d'eau aux copolymères obtenus lors de la polymérisation, et on neutralise au moins 10% des groupements carboxyle des copolymères hydrolysés, par de l'ammoniac, des amines ou des bases de métaux alcalins ou de metaux alcalino-terreux.

4. Procédé selon la revendication 1 ou 2, caractérisé en ce qu'on conduit la solvolyse par addition d'amines primaires et/ou secondaires aux copolymères obtenus lors de la polymérisation, de telle sorte que 10 à 50% des groupements carboxyle provenant au total des monomères (b) contenus en liaison polymère soient amidés et qu'au moins 10% des groupements carboxyle formés au total soient neutralisés.

5. Procédé selon la revendication 1 ou 2, caractérisé en ce qu'on conduit la solvolyse par addition d'alcools aux copolymères obtenus lors de la polymérisation, de telle sorte que 10 à 50% des groupements carboxyle provenant au total des monomères (b) contenus en liaison polymère soient estérifiés et qu'au moins 10% des groupements carboxyle formés au total soient neutralisés.

6. Procédé selon la revendication 1 ou 2, caractérisé en ce qu'on conduit la solvolyse en milieu aqueux par addition de sels d'acides aminocarboxyliques, de telle sorte que 10 à 50% des groupements carboxyle provenant au total des monomères (b) contenus en liaison polymère soient amidés et qu'au moins 10% des groupements carboxyle formés au total soient neutralisés.
